# FASCICULE DE BREVET EUROPEEN

(11) **EP 2 699 129 B1**
(45) Date de publication et mention de la délivrance du brevet: **22.03.2017**
(21) Numéro de dépôt: 12721605.9
(22) Date de dépôt: 13.04.2012
(51) Int. Cl.: A47J 31/36

(54) **MACHINE POUR LA PREPARATION D'UNE BOISSON**
MASCHINE ZUR ZUBEREITUNG EINES GETRÄNKS
MACHINE FOR PREPARING A BEVERAGE

(30) Priorité: 21.04.2011 WO PCT/IB2011/051756
(43) Date de publication de la demande: 26.02.2014
(73) Titulaire: Ethical Coffee Company SA, 1700 Fribourg (CH)
(72) Inventeur: MARILLER, Alain, CH-1801 Le Mont-Pèlerin (CH); GAILLARD, Jean-Paul, CH-1096 Cully (CH)
(74) Mandataire: August & Debouzy avocats
(86) Numéro de dépôt international: PCT/IB2012/051814
(87) Numéro de publication internationale: WO 2012/143832

(56) Documents cités:
- EP-A1- 2 105 074
- WO-A1-2005/004683
- WO-A1-2008/004116
- WO-A2-2006/005736

## Description

### Domaine de l'invention

La présente invention se situe dans le domaine de la préparation de boissons, p.ex. à base de café, par extraction d'une dose concentrée, p.ex. de café moulu, contenue dans une capsule. Elle se rapporte plus particulièrement aux dispositifs utilisant de telles doses, en particulier aux machines d'extraction comme les machines à café.

### Etat de la technique

Des capsules et des machines fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

D'autres capsules munies d'une membrane sont décrites dans les documents brevets suivants : EP 0 468 079 A, EP 0 806 373 A, EP 0 554 469 A.

A titre d'exemple, la publication WO 2005/004683, décrit un dispositif pour l'extraction d'une capsule. Comme décrit de façon détaillée dans cette publication, l'un des problèmes auquel l'on est confrontés dans de tels dispositifs est le positionnement de la capsule dans le dispositif et la fermeture de celui-ci autour de la capsule pour réaliser l'extraction.

On cherche notamment à permettre un positionnement très simple pour l'utilisateur et sûr pour la machine afin de réaliser l'extraction dans des conditions optimales.

De nombreuses publications de l'état de la technique ont été identifiées dans WO 2005/004683 et référence est faite à ces documents pour l'exposé détaillé de l'état de la technique (voir les pages 1-3 de WO 2005/004683).

Cet état de la technique WO 2005/004683 propose plusieurs modes d'exécution pour réaliser le système d'extraction. Le principe de cet état de la technique est le suivant: il s'agit de faire passer une capsule depuis une position intermédiaire à une position d'extraction, la capsule étant retenue dans une première position (dite intermédiaire), elle passe dans une position d'extraction et après l'extraction, la capsule est dégagée naturellement sous le simple effet de la gravitation, par exemple elle tombe dans une moyen de récupération et une nouvelle capsule peut être introduite dans la machine.

La partie fixe comporte un corps de guidage pour le mouvement en translation de la partie mobile vers la partie fixe. Le corps de guidage peut, par exemple, être orienté sensiblement horizontalement pour guider la partie mobile selon un mouvement horizontal. Ce corps de guidage est constitué par exemple d'au moins deux rails, de préférence quatre rails de guidage. Le dispositif selon l'invention permet une extraction par injection d'eau horizontale. La partie mobile est de préférence sensiblement cylindrique.

Dans le dispositif selon WO 2005/004683, la partie d'introduction et de positionnement de la capsule est disposée devant et perpendiculairement au corps de guidage et comprend au moins un moyen de guidage. De préférence, elle comprend deux moyens de guidage. Ces moyens peuvent être de toute sorte, par exemple, dans le cas de l'extraction d'une capsule selon le brevet EP 512'148, il s'agit de glissières d'introduction permettant l'engagement de la collerette de la capsule.

Dans WO 2005/004683, un premier mode d'exécution qui est notamment illustré dans les figures 5-6, un deuxième mode est illustré dans les figures 7-10 et un troisième mode est illustrés dans les figures 11-13.

De façon plus détaillée, dans le premier mode, le dispositif comprend des moyens d'arrêt de la capsule. Ces moyens d'arrêt sont configurés pour retenir la capsule en position intermédiaire lorsque la capsule est introduite dans la partie d'introduction et de positionnement. Ces moyens d'arrêt retiennent la capsule selon un axe décalé ou incliné par rapport à l'axe de la capsule en position d'extraction dans le logement, la position d'extraction correspondant à la position dans laquelle la partie mobile est refermée contre la partie fixe en renfermant la capsule.

Pour passer de la position intermédiaire à la position d'extraction, il existe deux solutions selon WO 2005/004683.

Une première solution consiste à maintenir la capsule en position intermédiaire de manière décalée par rapport à l'axe de la capsule en position d'extraction, par exemple, de façon à ce que la partie mobile dans son mouvement agisse sur la capsule pour la descendre et la pousser selon l'axe de ladite partie mobile dans sa position d'extraction. La capsule peut être décalée selon son axe de recentrage (ou axe d'extraction), par exemple parallèle à celui-ci, ou être inclinée par rapport à son axe de recentrage d'un certain angle, de préférence un angle faible inférieur à 30 degrés. Une telle solution permet d'éviter toute complexité mécanique et utilise un minimum de pièces mobiles. En effet, la capsule peut être simplement maintenue en position intermédiaire par des moyens d'arrêt statiques et c'est la partie mobile qui se charge de déplacer la capsule lors de son déplacement vers la partie fixe et vient alors la positionner en position d'extraction, en amenant l'axe de la capsule dans sa position d'extraction.

Dans un premier mode de réalisation préférentiel, la partie mobile est ainsi configurée pour forcer le passage de la capsule au delà des moyens d'arrêt lors du passage de la capsule de sa position intermédiaire à sa position d'extraction. Ainsi, lorsque que la partie mobile entraîne la capsule; celle-ci étant positionnée selon un axe décalé ou incliné, la capsule est rétablie de force dans l'axe de déplacement de la partie mobile correspondant à l'axe de la capsule en position d'extraction, ce qui force la capsule à passer au delà des moyens d'arrêt. Une fois les moyens d'arrêt passés par la capsule; celle-ci est mise en position d'extraction par l'une des parties au moins se refermant contre l'autre et appliquant la capsule contre la partie d'extraction. Une fois la réouverture des deux parties, la capsule n'est plus maintenue par les moyens d'arrêt et elle est donc libérable.

Une seconde possibilité est que la partie mobile pousse simplement la capsule dans son axe de déplacement dans sa position d'extraction.

Afin de réaliser cette deuxième possibilité, le dispositif de WO 2005/004683 propose des moyens d'arrêt configurés pour retenir la capsule en position intermédiaire selon un axe sensiblement coaxial avec l'axe du logement mais la partie mobile agit sur l'ouverture des moyens d'arrêt pour les écarter activement et permettre le passage de la capsule de sa position intermédiaire à sa position d'extraction.

Dans ce mode, les moyens de guidage sont pivotants et forment ou comprennent des moyens d'arrêt agences pour bloquer la capsule en position intermédiaire lorsque la partie mobile est en position d'ouverture et pour débloquer la capsule lorsque la partie mobile est en position de fermeture. Ces moyens de guidage sont actionnés en position de blocage et de déblocage par un levier actionneur, monté à rotation et disposé à l'extérieur de la partie mobile : ce levier, par le déplacement de la partie mobile, met les moyens de guidage en position de blocage ou de déblocage.

Dans une dernière forme de réalisation du dispositif selon l'invention décrite dans WO 2005/004683, celle-ci comprend devant le corps de guidage une butée escamotable, disposée sous la partie mobile. Cette butée escamotable est aussi actionnée par le déplacement de la partie mobile : elle permet de maintenir la capsule en position lorsque la partie mobile est en position d'ouverture.

Comme on le comprend, WO 2005/004683 propose plusieurs solutions distinctes pour permettre le maintien temporaire de la capsule dans une position intermédiaire, son déplacement dans une position d'extraction et sa libération après l'extraction, ces solution ayant toutes leur complexité, source potentielle de problèmes et malfonctions.

Une autre machine d'extraction est décrite dans le document WO2008004116.

### Exposé général de l'invention

Un des objectifs de la présente invention vise à améliorer le fonctionnement général de la machine.

Plus précisément, un but de l'invention est d'améliorer les systèmes connus, notamment les dispositifs décrits dans WO 2005/004683 en proposant des moyens qui soient simples, fiables et faciles à mettre en oeuvre.

Comme dans l'état de la technique cité ci-dessus, la présente invention s'applique à tout type de capsules, et en particulier aux capsules possédant un bord, comme une collerette, qui coopère avec des moyens de guidage de la machine, lesdites capsules contenant tout type de produit comme décrit dans WO 2005/004683. La présente invention peut s'utiliser dans les machines d'extraction classiques, typiquement celles décrites dans ce même état de la technique et la description et les principes de WO 2005/004683 s'appliquent de façon correspondante ici.

Une idée de la présente invention est de permettre le passage de la capsule de sa position intermédiaire (après son introduction dans la machine par l'utilisateur) dans laquelle son axe n'est pas décalé comme dans WO 2005/004683 à sa position d'extraction mais sans utiliser de moyens d'actionnement auxiliaires pour écarter les moyens de guidage ou pour former une butée comme dans le deuxième et troisième mode d'exécution de WO 2005/004683.

L'invention est notamment réalisée par l'utilisation de moyens de guidage souples qui possèdent un profile particulier: ces caractéristiques originales permettent à la fois le maintien de la capsule dans sa position intermédiaire et son passage à la position d'extraction sans nécessité ou action directe de moyens additionnels comme enseigné dans WO 2005/004683.

Alternativement, selon un mode de réalisation non-revendiqué, les moyens de guidage sont rigides mais c'est la capsule qui se déforme lors de son passage de la position intermédiaire à sa position d'extraction.

On obtient ainsi un système bien plus simple et fiable, plus facile à fabriquer et moins cher que ceux connus, notamment de WO 2005/004683.

Les différents modes d'exécution de l'invention sont définis dans les revendications annexées.

### Description détaillée de l'invention

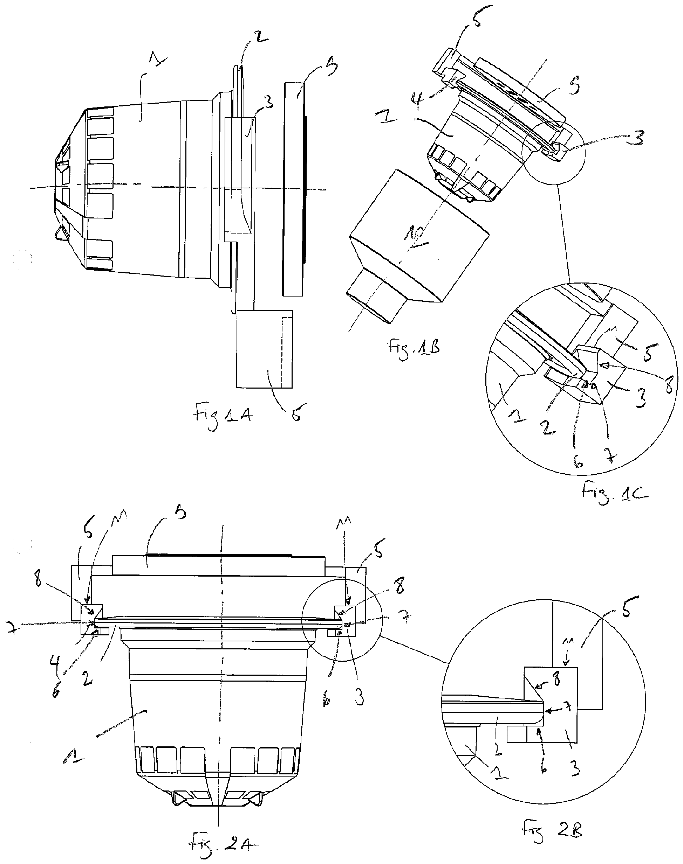

La présente invention sera mieux comprise par la description de modes d'exécution de celle-ci et de figures qui montrent
La figure 1 A illustre une vue de côté de l'invention.
La figure 1 B illustre une vue de dessus et en perspective de l'invention dans une première position.
La figure 1C illustre un détail de la figure 1 B.
La figure 2A illustre une vue de dessus de l'invention dans une première position.
La figure 2B illustre un détail de la figure 2A.

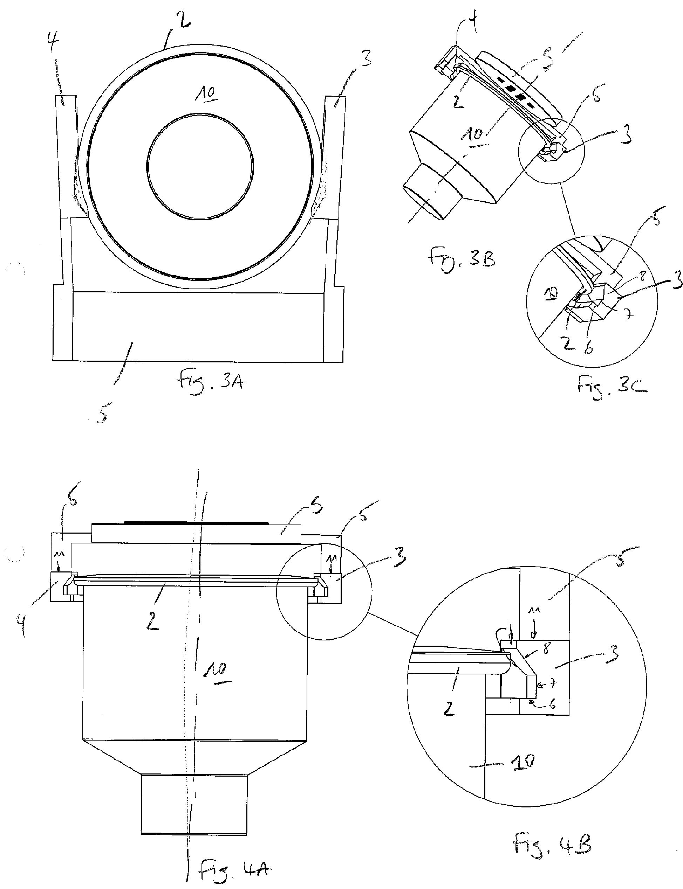

La figure 3A illustre une vue de face de l'invention.
La figure 3B illustre une vue de dessus et en perspective de l'invention dans une deuxième position.
La figure 3C illustre un détail de la figure 3B.
La figure 4A illustre une vue de dessus de l'invention dans une deuxième position.
La figure 4B illustre un détail de la figure 4A.

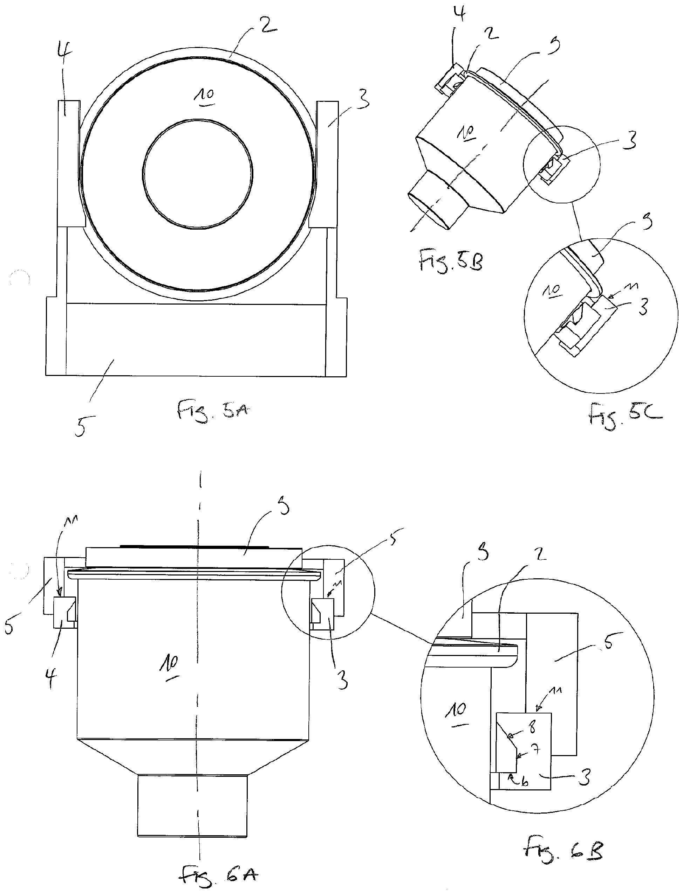

La figure 5A illustre une vue de face de l'invention dans une troisième position.
La figure 5B illustre une vue de dessus et en perspective de l'invention dans une troisième position.
La figure 5C illustre un détail de la figure 5B.
La figure 6A illustre une vue de dessus de l'invention dans une troisième position.
La figure 6B illustre un détail de la figure 6A.

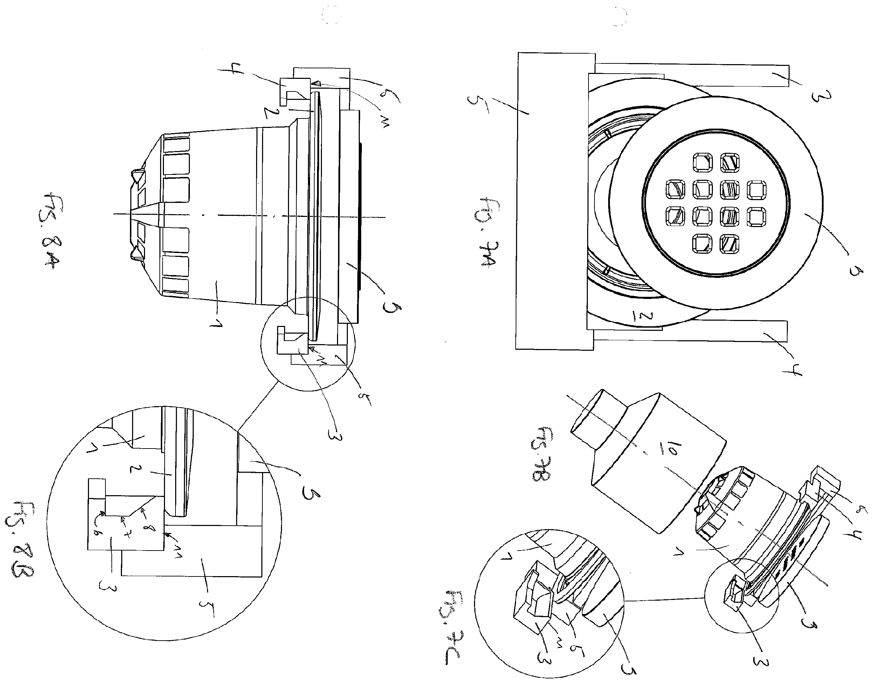

La figure 7A illustre une vue de face de l'invention dans une quatrième position.
La figure 7B illustre une vue de dessus et en perspective de l'invention dans une quatrième position.
La figure 7C illustre un détail de la figure 7B.
La figure 8A illustre une vue de dessus de l'invention dans une quatrième position.
La figure 8B illustre un détail de la figure 8A.

Dans la description qui suit, les éléments similaires et/ou identiques dans les différentes figures sont identifiés au moyen des mêmes références numériques.

Les figures 1A-1C et 2A-2B illustrent le système selon l'invention dans une première position. Ainsi, une capsule 1 avec un rebord 2 (ladite capsule étant connue dans l'état de la technique, voir la description ci-dessus) est introduite dans des glissières 3 et 4 tenues par un porte-glissières 5. La capsule, de façon connue par exemple de WO 2005/004683, est introduite depuis le haut (correspondant au haut de la figure 1A), l'axe de la capsule 1 étant approximativement horizontal. Elle descend, par gravité, sa collerette 2 coulissant dans les glissières 3, 4. Les glissières 3 et 4 ont un profil intérieur asymétrique avec un fond 7 et un côté 6 perpendiculaire en "L" et un deuxième côté 8 non-perpendiculaire mais formant un angle par rapport au fond 7, comme un plan incliné, comme on le voit bien sur les figures 1C, 2A et 2B notamment.

Le fond des glissières se termine en "V" comme on le comprendra plus loin dans la description formant des moyens d'arrêt afin de maintenir la capsule 1 dans une position déterminée après son introduction dans la machine, c'est-à-dire dans les glissières 3, 4 dans la position intermédiaire telle que discutée dans WO 2005/004683.

Dans les figures 1 A, 1 B et 2A on a illustré en plus la plaque d'extraction 9 contre laquelle la capsule 1 viendra s'appuyer lors de la procédure d'extraction et la cage à capsule 10 qui entourera et entrainera la capsule 1 pour l'extraction. Cette procédure est similaire à celle connue de l'état de la technique, par exemple exposée dans WO 2005/004683.

Les figures 3A-3C et 4A-4B montrent le système selon l'invention dans une deuxième position. Dans cette position, la capsule 1 est déplacée axialement en direction de la plaque 9 par la cage à capsule 10, par rapport aux figures précédentes. On peut le constater d'abord dans la figure 3A dans laquelle les glissières 3 et 4 sont écartées l'une de l'autre en raison du déplacement de la capsule 1, ce déplacement étant visible dans les figures 3B, 3C, 4A et 4B. En effet dans ces figures, on voit que la collerette 2 de la capsule 1 s'est déplacée le long du plan incliné 8 (en comparant par exemples les figures 2B et 4B).

Ce déplacement est axial et provoqué par le mouvement axial de la cage à capsule 10 selon les principes connus. Ainsi, le mouvement de la collerette 2 sur la plan incliné 8 a tendance à écarter les deux glissières comme illustré dans la figure 3A.

Les figures 5A à 5C et 6A, 6B montrent le système dans une position d'extraction. Dans celle-ci, la capsule 1 est plaquée contre la plaque 9 et la cage à capsule 10 ferme hermétiquement le système pour permettre l'extraction selon le procédé connu.

Comme on peut l'apercevoir dans les figures 5B, 5C, 6A, 6B, la collerette 2 a dépassé les glissières 3, 4 et se trouve plaquée contre la plaque 9 (voir notamment le détail de la figure 6B). Les glissières 3, 4 sont revenues dans une position a peu près perpendiculaire au porte glissière 5 (comparer les figures 3A et 5A).

Dans les figures 7A à 7C et 8A, 8B, on a illustré le système dans une position d'éjection de la capsule 1, par exemple après l'extraction.

La cage 10 est retirée et la capsule 1 s'éloigne de la plaque 9, entraînée par la cage 10 jusqu'à ce que la collerette 2 de la capsule arrive en butée 11 contre les glissières 3, 4 (illustré en détail dans les figure 8A et 8B). Dans ce cas, les glissières 3, 4 ne s'écartent pas mais retiennent la capsule 1 et permettent donc son extraction de la cage 10 qui elle continue son mouvement de retrait axial.

Une fois la cage 10 entièrement retirée, la capsule peut tomber dans un récupérateur (non illustré) en glissant le long des glissières 3 et 4, comme représenté dans la figure 7A.

Comme on le comprend de la description qui précède et des figures, les glissières selon l'invention ont plusieurs rôles: d'une part retenir la capsule en position axiale alignée pour permettre l'amenée de la cage 10; ensuite libération par écartement pour permettre le mouvement axial de la capsule et de la cage pour les amener en position d'extraction; et finalement retenue sur forme de butée de la capsule 1 pour la faire sortir de la cage 10 après l'extraction.

Dans un autre mode qui n'est pas revendiqué, on peut prévoir que les moyens de guidage, à savoir les glissières par exemple qui sont décrites ci-dessus, sont rigides ou se déforment difficilement ou pas du tout, de sorte que lors du passage de la capsule, c'est plutôt la capsule, par exemple la collerette de la capsule, qui se déforme au lieu des glissières qui s'écartent comme décrit ci-dessus, une déformation des deux (c'est-à-dire écartement des glissières et déformation de la capsule) étant aussi envisageable. Le principe général de la présente invention ne change pas en ce sens que la capsule n'est pas inclinée comme dans l'état de la technique cité plus haut, ou son axe n'est pas décalé par rapport à celui de la cage à capsule, et il n'y a pas non plus de moyens auxiliaires de retenue comme décrit dans l'état de la technique.
La capsule et/ou la collerette qui se déforme (au moins partiellement) lors du passage, peut subir une déformation élastique ou plastique. De préférence, les glissières, si elles se déforment, subissent une déformation élastique. L'effet de butée généré par les glissières lors du retrait de la cage qui permet la retenue de la capsule utilisée peut éventuellement être légèrement ou fortement amoindri en fonction de la déformation de la capsule (élastique ou plastique, forte ou faible) et dans un tel cas il peut être judicieux d'utiliser des moyens additionnels pour aider à l'extraction de la capsule utilisée. Néanmoins, si les déformations sont faibles, l'effet butée sera réalisé malgré tout.
La déformation (plastique) de la capsule et/ ou collerette est de préférence faible de façon à ne pas risquer de remettre en cause l'étanchéité lors de l'extraction. Bien entendu, il peut être utile et/ou nécessaire de prévoir des moyens supplémentaires pour améliorer l'étanchéité.

Les glissières peuvent être en toute matière adaptée à l'usage selon l'invention. Par exemple, elles peuvent être en matière plastique, synthétique etc.

L'invention n'est bien entendu pas limitée aux modes d'exécution décrits à titre illustratifs et non-limitatifs et des variations sont possibles dans le cadre de la protection revendiquée. On peut également combiner les modes d'exécution décrits de façon libre, en fonction des circonstances.

On peut notamment faire appel à des moyens équivalents à ceux décrits.

Références numériques utilisées dans les figures :
1. capsule
2. collerette de capsule
3. glissière
4. glissière
5. porte-glissière
6. première paroi de glissière
7. fond de glissière
8. deuxième paroi de glissière, plan incliné
9. plaque d'extraction
10. cage à capsule
11. butée de glissière

## Revendications

1. Machine d'extraction utilisant des capsules (1) introduites dans une cage à capsule (10), ladite machine comprenant des glissières (3,4) permettant le guidage d'entrée d'une capsule dans la machine, le maintien de la capsule dans une position axialement alignée pour permettre l'amenée de la cage, la libération de la capsule lors d'un déplacement axial pour aller dans une position d'extraction, la retenue de la capsule lorsqu'elle quitte sa position d'extraction et le guidage de sortie de la capsule libérée,
lesdites glissières étant écartées l'une de l'autre en raison du déplacement de la capsule et une collerette de la capsule se déplaçant le long d'un plan incliné desdites glissières.

2. Machine selon la revendication 1, lesdites glissières étant flexibles pour se déformer de façon à permettre le passage de la capsule de la position axialement alignée à la position d'extraction.

3. Machine selon la revendication 1, lesdites glissières étant peu ou pas flexibles, le passage de la capsule de la position axialement alignée à la position d'extraction déformant la capsule et/ou une partie de celle-ci.

4. Machine selon la revendication 2 ou 3, lesdites déformations étant élastiques et/ou plastiques.

5. Machine selon l'une des revendications précédentes, lesdites glissières comprenant au moins une première paroi (6), un fond (7), une deuxième paroi sous forme de plan incliné (8) et une face formant butée (11).

6. Machine selon l'une des revendications précédentes, comprenant un porte-glissière (5) sur lequel sont montées lesdites glissières, ou formant une pièce unique.

7. Machine selon l'une des revendications précédentes, lesdites glissières étant formées en matière synthétique ou plastique.

8. Machine selon l'une des revendications précédentes, en combinaison avec au moins une capsule, par exemple une capsule à café.

## Patentansprüche

1. Extraktionsmaschine, die in einen Kapselkäfig (10) eingesetzte Kapseln (1) verwendet, wobei die Maschine Gleitschienen (3,4) umfasst, welche die Eingangsführung einer Kapsel in die Maschine, das Halten der Kapsel in einer axial ausgerichteten Position, um die Zufuhr des Käfigs zu erlauben, die Freigabe der Kapsel bei einer axialen Verlagerung, um in eine Extraktionsposition zu gelangen, das Zurückhalten der Kapsel, wenn sie ihre Extraktionsposition verlässt, und die Ausgangsführung der freigegebenen Kapsel erlaubt, wobei die Gleitschienen aufgrund der Verlagerung der Kapsel voneinander beabstandet sind und sich eine Halskrause der Kapsel entlang einer geneigten Ebene der Gleitschienen verlagert.

2. Maschine nach Anspruch 1, wobei die Gleitschienen flexibel sind, um sich derart zu verformen, dass der Übergang der Kapsel von der axial ausgerichteten in die Extraktionsposition erlaubt wird.

3. Maschine nach Anspruch 1, wobei die Gleitschienen wenig oder nicht flexibel sind, wobei der Übergang der Kapsel von der axial ausgerichteten Position in die Extraktionsposition die Kapsel und/oder einen Teil derselben verformt.

4. Maschine nach Anspruch 2 oder 3, wobei die Verformungen elastisch und/oder plastisch sind.

5. Maschine nach einem der vorangehenden Ansprüche, wobei die Gleitschienen mindestens eine erste Wand (6), einen Boden (7), eine zweite Wand in Form einer geneigten Ebene (8) und eine Fläche, die einen Anschlag (11) bildet, umfassen.

6. Maschine nach einem der vorangehenden Ansprüche, umfassend einen Gleitschienenhalter (5), auf dem die Gleitschienen montiert sind oder ein einziges Teil bilden.

7. Maschine nach einem der vorangehenden Ansprüche, wobei die Gleitschienen aus synthetischem oder plastischem Material gebildet sind.

8. Maschine nach einem der vorangehenden Ansprüche in Kombination mit mindestens einer Kapsel, beispielsweise einer Kaffeekapsel.

## Claims

1. An extraction machine using capsules (1) inserted into a capsule cage (10), said machine comprising guideways (3, 4) making it possible to guide the entry of the capsule into the machine, keep the capsule in an axially aligned position to allow the arrival of the cage, release the capsule during an axial movement to enter an extraction position, retain the capsule when it leaves its extraction position and guide the exit of the released capsule,
said guideways being separated from one another due to the movement of the capsule and a collar of the capsule moving along an inclined plane of said guideways.

2. The machine according to claim 1, said guideways being flexible to deform so as to allow the passage of the capsule from the axially aligned position to the extraction position.

3. The machine according to claim 1, said guideways having little to no flexibility, the passage of the capsule from the axially aligned position to the extraction position deforming the capsule and/or a part thereof.

4. The method according to claim 2 or 3, said deformations being elastic and/or plastic.

5. The machine according to one of the preceding claims, comprising at least a first wall (6), a bottom (7), a second wall in the form of an inclined plane (8) and a stop-forming face (11).

6. The machine according to one of the preceding claims, comprising a runner tube (5) on which they are mounted, or forming a single piece.

7. The machine according to one of the preceding claims, made from a synthetic or plastic material.

8. The machine according to one of the preceding claims, combined with at least one capsule, for example a coffee capsule.
